# EUROPEAN PATENT SPECIFICATION

(11) **EP 4 020 947 B1**
(45) Date of publication and mention of the grant of the patent: **06.09.2023**
(21) Application number: 20907802.1
(22) Date of filing: 29.10.2020
(51) Int. Cl.: H04M 1/02, H04M 1/21, G06F 1/16

(54) **MOBILE TERMINAL**
MOBILES ENDGERÄT
TERMINAL MOBILE

(30) Priority: 24.12.2019 CN 201911349248
(43) Date of publication of application: 29.06.2022
(73) Proprietor: Honor Device Co., Ltd., Shenzhen, Guangdong 518040 (CN)
(72) Inventor: LUO, Fan, Shenzhen, Guangdong 518129 (CN)
(74) Representative: Isarpatent
(86) International application number: PCT/CN2020/124892
(87) International publication number: WO 2021/129131

(56) References cited:
- WO-A1-2017/160025
- WO-A1-2018/161424
- WO-A1-2018/196149
- CN-A- 111 147 633
- CN-U- 204 229 370
- CN-U- 206 301 776
- CN-U- 208 387 101
- CN-U- 208 387 101
- CN-U- 209 805 867
- CN-U- 209 805 867
- US-A1- 2016 334 897

## Description

### CROSS-REFERENCE TO RELATED APPLICATIONS

This disclosure generally relates to the field of electronic device technologies.

### TECHNICAL FIELD

The invention relates in particular to a mobile terminal.

### BACKGROUND

As electronic devices are evolving and user demands are increasing, electronic devices with a higher screen-to-body ratio has become a mainstream development trend for most manufacturers. For example, a mobile phone with a higher screen-to-body ratio can exhibit more display content, so that experience and visual perception of a user can be improved. However, in addition to a display screen, the front of the mobile phone needs to be equipped with an optical device such as a proximity sensor, an optical sensor, or a camera. For example, an infrared proximity sensor is configured to detect whether an external object is approaching or moving away from the display screen. The infrared proximity sensor is usually disposed below the display screen. The display screen is provided with a light-transmitting hole structure through which the infrared proximity sensor can emit infrared light to the outside and then receive infrared light reflected by an external object (for example, a human ear). The intensity or energy of the received infrared light is compared with a preset threshold, so as to determine whether an external object is approaching or moving away. For example, if the received energy value is greater than a threshold, it is considered that an object is approaching; or if the received energy value is less than the threshold, it is considered that the object is moving away. In actual application, when a user is answering the phone, the ear will approach (or touch) the display screen. To prevent a touch operation after the ear touches the display screen, the mobile phone can turn off or turn on the display screen (or touch module) based on a signal generated by the infrared proximity sensor, so as to implement a touch protection function. However, in a process of assembling the display screen or a process of assembling the display screen onto the housing, adhesives tend to overflow into the light-transmitting hole structure, which will affect light transmission of the light-transmitting hole structure and then affect normal operation of the optical device.

WO 2017/160025 A1 discloses an alignment device for a liquid-crystal display module and a cover glass, and a method of manufacturing an LCD device using the same. The alignment device includes a supporting unit, a camera unit and a pressing unit. The supporting unit supports the liquid-crystal display module and is movable. The camera unit captures an image of the cover glass to inspect the alignment between the cover glass and the liquid-crystal display module attached together by a filler. The pressing unit presses the cover glass, and is configured to press a specific portion of the periphery of the upper substrate of the liquid-crystal display module.

CN 209 805 867 (and its English language equivalent US 2021/271295 A1) discloses a terminal. The terminal includes a side frame, a front cover, a back cover, a display panel, and an ambient light sensor. The front cover and the back cover respectively cover two opposite sides of the side frame. The display panel is fastened to one side of the front cover facing the back cover. An outer peripheral side of the display panel and an inner peripheral side of the side frame are disposed opposite to each other and form a light-transmitting gap therebetween. The light-transmitting gap forms a first projection on the front cover. Alight sensing surface of the ambient light sensor forms a second projection on the front cover. The terminal has a relatively high screen-to-body ratio.

### SUMMARY

The object of the present invention is to provide a mobile terminal capable of ensuring normal operation of an optical device such as a proximity sensor. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

The mobile terminal according the invention includes a housing, an optical device, and a display screen. The housing includes a frame, the optical device is disposed in the housing, and the display screen is bonded into the frame by an adhesive. Specifically, the display screen includes a display panel and a cover plate, the cover plate is provided with a first mounting region, a second mounting region, and a light-transmitting region, the first mounting region is located at an edge of the cover plate and configured to bond to the frame by an adhesive; the second mounting region is located on a lower surface of the cover plate and configured to bond to the display panel by an adhesive; and the light-transmitting region is located on the lower surface of the display screen. The optical device is configured to receive light from the outside or project light to the outside through the light-transmitting region, and a transparent coating is coated at the junction between the light-transmitting region and the first mounting region or the second mounting region to prevent the adhesive from overflowing to the light-transmitting region.

In the mobile terminal according to the embodiments of this application, the transparent coating is coated between the light-transmitting region and the first mounting region or the second mounting region to effectively prevent the adhesive from overflowing to the light-transmitting region, thereby ensuring operation performance of the optical device.

Specifically, when the display panel is pressed into the first mounting region on the cover plate, due to a squeezing force on the adhesive from the display panel and the cover plate, part of the adhesive overflows to the light-transmitting region. However, under the action of the transparent coating, the overflowing adhesive is prevented from flowing to the light-transmitting region, thereby ensuring that the light-transmitting region is not occluded by the overflowing adhesive, so as to ensure the light transmission of the light-transmitting region. In addition, when the display screen is pressed into the frame, due to a squeezing force on the adhesive from the display screen and the frame, part of the adhesive overflows into the housing (for example, the sparent coating, the overflowing adhesive is prevented from flowing to the light-transmitting region, so as to ensure that the light-transmitting region is not occluded by the overflowing adhesive, thereby ensuring the light transmission of the light-transmitting region.

In specific implementations, the transparent coating may be made from a material with low surface energy, for example, polytetrafluoroethylene, polypropylene, or polyethylene.

In addition, the transparent coating may be coated at the junction between the light-transmitting region and the first mounting region or the second mounting region, and may alternatively be spread over the light-transmitting region or coated on a part of the light-transmitting region to ensure that the overflowing adhesive will not occlude the light-transmitting region. Specifically, in a process of pressing the display panel into the first mounting region or pressing the display screen into the frame, the contact angle between the adhesive and the transparent coating will be increased (for example, greater than 90°) after the adhesive overflowing to the light-transmitting region is in contact with the material with low surface energy, so that the overflowing adhesive will swell and shrink at the transparent coating, thereby effectively preventing the adhesive from overflowing to the light-transmitting region.

In some implementations, the transparent coating may alternatively be a transparent adhesive layer. For example, the transparent coating may be made from any one or a combination of at least two of acrylate, polyvinyl butyral, polyurethane, styrene resin and unsaturated monomer anaerobic adhesive with good light transmission. Specifically, in a process of pressing the display panel into the first mounting region or pressing the display screen into the frame, the transparent coating has some blocking effect, which will effectively prevent the adhesive from overflowing to the light-transmitting region. In addition, the transparent coating has no adverse effect on the light transmission of the light-transmitting region, which can effectively ensure the operation performance of the optical device such as a proximity sensor or an optical sensor.

In some specific implementations, a thickness of the transparent coating may be not less than that of the adhesive to effectively improve the blocking effect on the adhesive. Alternatively, in some implementations, fluidity of the transparent coating may be less than that of the adhesive, so that the blocking effect on the adhesive can be effectively improved.

In specific implementations, the light-transmitting region may be disposed at different locations.

For example, the light-transmitting region may be located right above the display panel. Specifically, to increase the screen-to-body ratio of the display panel, a through hole may be provided in the display panel, and the lower surface of the cover plate may be provided with a second mounting region for attaching to the display panel. After the display panel is attached and secured to the second mounting region of the cover plate through the adhesive, the through hole is located right below the light-transmitting region, and the optical device below the through hole can project light to the outside or receive light from the outside through the through hole and the light-transmitting region. In some implementations, to prevent the display panel from occluding the light-transmitting region, a projection of the through hole on the cover plate may be located in the light-transmitting region, or a contour of the through hole may be no larger than that of the light-transmitting region.

In addition, to increase the screen-to-body ratio of the display screen, the light-transmitting region may alternatively be located at an edge of the display panel. Specifically, the light-transmitting region may be disposed between an edge of the cover plate and an edge of the display panel.

In specific implementations, the first mounting region may be disposed at different locations.

According to the invention the first mounting region is disposed at a side of the cover plate. Specifically, the entire side of the cover plate may be used as the first mounting region, or a part of the side (for example, a lower half of the side) may be used as the first mounting region.

For example, a side of the cover plate may be provided with a downward bevel, where the downward bevel may be used as the first mounting region; the light-transmitting region is located on the lower surface of the cover plate and is disposed near an edge of the cover plate. Specifically, the light-transmitting region may be a circular contour, a rectangular contour or a strip contour disposed near a top end, a lower end, or left and right ends of the cover plate. In specific implementations, the adhesive may be coated around the first mounting region, the transparent coating is coated on the light-transmitting region, and then the display screen is pressed into the frame, so that the adhesive is fully bonded to an abutment surface of the frame.

In addition, in specific implementations, to ensure the bonding effect between the abutment surface of the frame and the adhesive, the abutment surface may be a bevel structure opposite to the first mounting region. When the display screen is pressed into the frame, the abutment surface can provide a good abutment effect to the adhesive and ensure a uniform thickness of the adhesive after pressing, so that the bonding effect between the cover plate and the frame can be effectively ensured.

In addition, in some implementations, an edge part of the lower surface of the cover plate may alternatively be used as the first mounting region. When the edge part of the lower surface of the cover plate is used as the first mounting region, an inner wall of the frame may be provided with a stepped structure to ensure the bonding effect between the frame and the cover plate, and a horizontal plane of the stepped structure may be used as the abutment surface. It may be understood that in some implementations, the side and the edge part of the lower surface of the cover plate may be used separately as the first mounting region, or may be used together as the first mounting region. That is, the adhesive may be coated on the side or the edge part of the lower surface of the cover plate, or may be coated on the side and the edge part of the lower surface of the cover plate. Correspondingly, the horizontal plane of the stepped structure in the frame and a vertical plane above the horizontal plane may be used separately as the abutment surface, or may be used together as the abutment surface. That is, the adhesive may be bonded to the horizontal plane of the stepped structure, or may be bonded to the vertical plane.

In addition, to prevent the adhesive from overflowing to the light-transmitting region, a corresponding structure may alternatively be disposed in the frame (or housing) to hold the overflowing adhesive or guide an overflow direction.

For example, an underside of the abutment surface may be provided with an excessive adhesive groove to hold the overflowing adhesive. Specifically, in a process of mounting the display screen into the frame, the adhesive that overflows downwards will flow smoothly into the holding groove, so that the adhesive can be effectively prevented from overflowing to the light-transmitting region, thereby avoiding adverse effects from the adhesive, such as occlusion of the light-transmitting region.

In specific implementations, the excessive adhesive groove may be disposed at different locations. For example, the excessive adhesive groove may be disposed around the inner wall of the frame to hold the adhesive overflowing from all areas; alternatively, the excessive adhesive groove may be disposed only in a location corresponding to the light-transmitting region, so that the overflowing adhesive can be effectively prevented from flowing to the light-transmitting region.

In addition, to provide a good guiding effect to the overflowing adhesive, and to prevent the overflowing adhesive from flowing to the light-transmitting region, in some implementations, a coating with high surface energy may be coated on an inner wall of the excessive adhesive groove, and the contact angle between the adhesive and the coating with high surface energy will be reduced (for example, less than 90°) when the adhesive is in contact with the coating with high surface energy, so as to guide an overflow direction of the adhesive, so that the overflowing adhesive can flow smoothly into the excessive adhesive groove and can be prevented from flowing to the light-transmitting region.

In specific implementations, the coating with high surface energy may be a metal coating such as copper and aluminum, or another coating capable of providing a guiding effect to the adhesive.

In addition, in some implementations, the transparent coating in the display screen and the excessive adhesive groove in the frame may alternatively be used in combination to effectively prevent the overflowing adhesive from occluding the light-transmitting region.

In actual application, the optical device may include a proximity sensor and an optical sensor.

For example, when the optical device is a proximity sensor, the proximity sensor may be located near the top (or receiver) of the mobile phone, and correspondingly, the light-transmitting region may be located near the top (or receiver) of the display screen. When a user is performing an operation such as making or receiving a call or listening to voice, if the proximity sensor senses that an object (for example, a person's ear or face) is approaching the proximity sensor (or display screen), a controller can turn off the display screen or disable a touch function of the display screen to prevent an unintended touch operation. When the proximity sensor senses that an object (for example, a person's ear or face) is moving away from the proximity sensor (or display screen), the controller can turn on the display screen or enable the touch function of the display screen for use by the user.

When the optical device is an optical sensor, the optical sensor may be disposed at a location near the top end or the lower end of the mobile phone or at another location, and correspondingly, the light-transmitting region may be disposed at a location near the top end or the lower end of the display screen or at another location corresponding to the location of the optical sensor. Specifically, the optical sensor can sense the intensity of light in the outside through the light-transmitting region. When the light in the outside is sufficient, a processor can increase the brightness of the display screen based on a signal from the optical sensor. Correspondingly, when the optical sensor senses that the light in the outside is weak, the processor can decrease the brightness of the display screen based on a signal from the optical sensor to allow the brightness of the display screen to match the brightness in the outside, so that the display screen displays a brightness suitable for the user to reduce eye fatigue and improve user experience.

In some implementations, although not claimed, when there are a plurality of optical devices in a mobile phone, the plurality of optical devices can share a light-transmitting region. Alternatively, the display screen may be provided with the same number of light-transmitting regions as that of the optical devices, and each optical device can receive light from the outside or project light to the outside through its corresponding light-transmitting region. For example, when a proximity sensor and an optical sensor are disposed in the mobile phone, the proximity sensor and the optical sensor can share a light-transmitting region; alternatively, two light-transmitting regions are disposed in the display screen, one light-transmitting region corresponds to the proximity sensor, and the other light-transmitting region corresponds to the optical sensor.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### BRIEF DESCRIPTION OF DRAWINGS

FIG. 1 is a schematic exploded view of a mobile terminal according to an embodiment of this application;
FIG. 2 is a schematic sectional view of a mobile terminal according to an embodiment of this application;
FIG. 3 is a partial enlarged view of FIG. 2;
FIG. 4 is a schematic sectional view of another mobile terminal according to an embodiment of this application;
FIG. 5 is a partial enlarged view of FIG. 4;
FIG. 6 is a partial schematic sectional view of a mobile terminal according to an embodiment of this application;
FIG. 7 is a partial schematic sectional view of a mobile terminal according to an embodiment of this application;
FIG. 8 is a schematic sectional view of a mobile terminal according to an embodiment of this application;
FIG. 9 is a partial enlarged view of FIG. 8;
FIG. 10 is a partial schematic sectional view of another mobile terminal according to an embodiment of this application;
FIG. 11 is a partial schematic sectional view of another mobile terminal according to an embodiment of this application;
FIG. 12 is a partial schematic sectional view of another mobile terminal according to an embodiment of this application;
FIG. 13 is a partial schematic sectional view of another mobile terminal according to an embodiment of this application;
FIG. 14 is a partial schematic sectional view of another mobile terminal according to an embodiment of this application;
FIG. 15 is a partial schematic sectional view of another mobile terminal according to an embodiment of this application;
FIG. 16 is a partial schematic sectional view of another mobile terminal according to an embodiment of this application;
FIG. 17 is a partial schematic sectional view of another mobile terminal according to an embodiment of this application; and
FIG. 18 is a partial schematic sectional view of another mobile terminal according to an embodiment of this application.

### DESCRIPTION OF EMBODIMENTS

To make the objectives, technical solutions, and advantages of this application clearer, the following further describes this application in detail with reference to the accompanying drawings.

To facilitate the understanding of the mobile terminal according to the embodiments of this application, the following first describes an application scenario of the mobile terminal.

A mobile terminal according to the embodiments of this application may include a mobile phone, a tablet computer and a display.

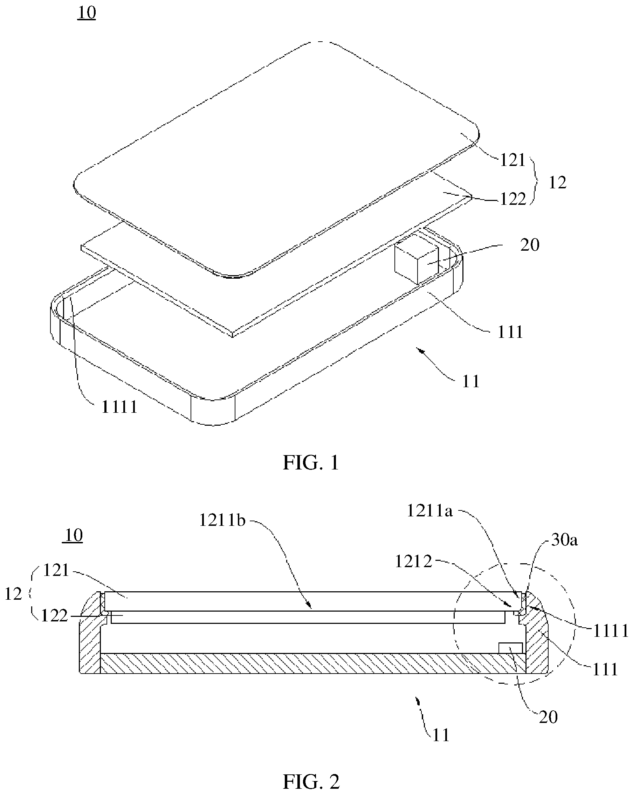

As shown in FIG. 1, a mobile phone 10 is used as an example, and the mobile phone 10 includes components such as a housing 11, an optical device 20, a display screen 12, and a processor (not shown). The housing 11 includes a frame 111, and the display screen 12 is capped at an upper side of the housing 11. Edges of the display screen 12 are bonded to an inner side (abutment surface 1111) of the frame 111 by an adhesive (for example, any one or a combination of at least two of acrylate, polyvinyl butyral, polyurethane, styrene resin and unsaturated monomer anaerobic adhesive with good light-shielding properties) to achieve a fixed connection between the display screen 12 and the housing 11 (frame 111). In addition, the tightness between the display screen 12 and the housing 11 (frame 111) can also be improved to prevent impurities such as dust from entering the display screen 12. In addition, the opacifier adhesive can also effectively prevent ambient light from entering the interior of the housing 11 and affecting normal operation of the optical device 20 (for example, an optical sensor).

According to the invention, the display screen 12 includes a cover plate 121 and a display panel 122 located on a lower surface of the cover plate 121. Specifically, the display panel 122 may include an LED screen and an OLED screen, and the cover plate 121 may include a glass plate and a transparent resin plate. The cover plate 121 is attached to an upper surface of the display panel 122, which can provide protection for the display panel 122 to a certain extent and prevent the display panel 122 from damage under an external force (for example, dropping or touching).

As shown in FIG. 2, in actual application, because the optical device 20, such as a proximity sensor or an optical sensor, needs to project light to the outside or receive light from the outside through the display screen 12, a light-transmitting hole structure (light-transmitting region 1212) needs to be disposed in the display screen 12. In the embodiments provided in this application, to increase the screen-to-body ratio of the display screen 12 (that is, to increase the area of the lower surface of the cover plate 121 occupied by the display panel 122), the light-transmitting hole structure (light-transmitting region 1212) may be disposed near an edge of the display screen 12 or inside the display screen 12.

As shown in FIG. 2, in an embodiment provided in this application, the light-transmitting hole structure (light-transmitting region 1212) is disposed near an edge of the display screen 12. Specifically, the light-transmitting hole structure (light-transmitting region 1212) may be disposed between an edge of the cover plate 121 and an edge of the display panel 122.

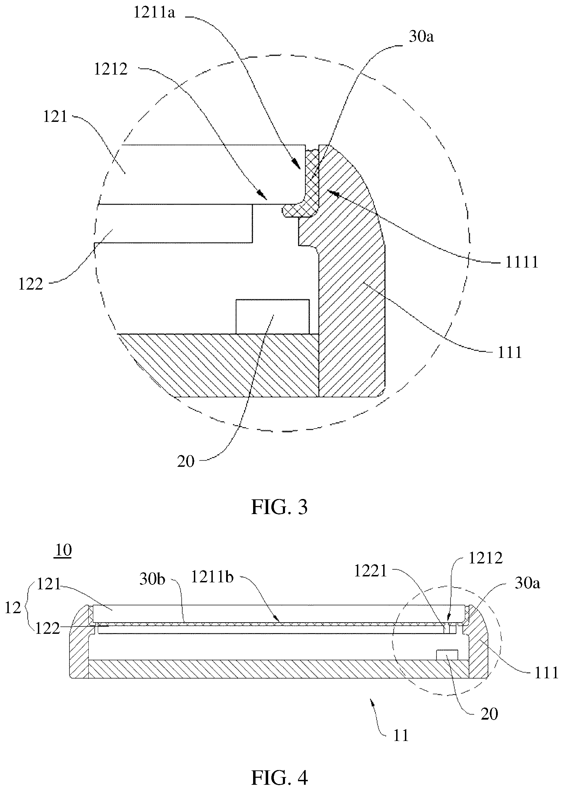

When the display screen 12 is mounted into the frame 111, an adhesive 30a is first coated around an edge (first mounting region 1211a) of the display screen 12 (cover plate), and then the display screen 12 is placed into the frame 111, so that the adhesive 30a is bonded to the abutment surface 1111 of the frame 111. In specific implementations, to ensure the bonding effect of the adhesive 30a between the display screen 12 and the frame 111, a downward force may be applied to the display screen 12. Referring to FIG. 3, in this process, part of the adhesive 30a overflows downwards due to a squeezing force on the adhesive 30a from the display screen 12 and the frame 111, and even the overflowing adhesive 30a is bonded to the light-transmitting region 1212 (or a part of the light-transmitting region 1212), thereby occluding the light-transmitting region 1212 and reducing the normal operation performance of the optical device 20.

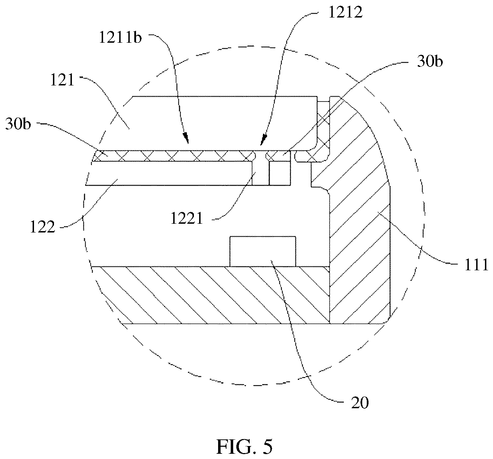

As shown in FIG. 4 and FIG. 5, in another embodiment provided in this application, the light-transmitting hole structure may be disposed in the display screen 12. Specifically, a through hole 1221 may be provided in the display panel 122, and the lower surface of the cover plate 121 is provided with a second mounting region 1211b for attaching to the display panel 122. After the display panel 122 is attached and secured to the second mounting region 1211b of the cover plate 121 through the adhesive 30b (for example, any one or a combination of at least two of acrylate, polyvinyl butyral, polyurethane, styrene resin and unsaturated monomer anaerobic adhesive with good light transmission), the through hole 1221 is located right below the light-transmitting region 1212. The optical device 20 below the through hole 1221 can project light to the outside or receive light from the outside through the through hole 1221 and the light-transmitting region 1212. When the display panel 122 is attached and secured to the second mounting region 1211b of the cover plate 121, to ensure the bonding effect of the adhesive 30b between the cover plate 121 and the display panel 122, a squeezing force may be applied to the display panel 122 and the cover plate 121. In this process, part of the adhesive 30b overflows to the light-transmitting region 1212, and even the overflowing adhesive 30b is bonded to the light-transmitting region 1212 (or a part of the light-transmitting region 1212), thereby occluding the light-transmitting region 1212 and reducing the normal operation performance of the optical device 20 (for example, optical distortion).

Therefore, an embodiment of this application provides a mobile terminal capable of reducing or avoiding occlusion of the light-transmitting region 1212 by the adhesive.

Terms used in the following embodiments are merely intended for the purpose of describing specific embodiments, but not intended to limit this application. The terms "one", "a/an", "said", "the" and "this" of singular forms used in the specification and the appended claims of this application are also intended to include, for example, the form of "one or more", unless otherwise specified in the context clearly. It should be further understood that in the following embodiments of this application, "at least one" and "one or more" mean one, two, or more than two. The term "and/or" is used to describe an association relationship between associated objects, and indicates that three relationships may exist. For example, A and/or B may represent the following three cases: Only A exists, both A and B exist, and only B exists. A and B may be singular or plural. The character "/" generally indicates an "or" relationship between associated objects.

Referring to "one embodiment" or "some embodiments" or the like described in the specification means that one or more embodiments of this application include a specific feature, structure, or characteristic described with reference to the embodiment. Therefore, the statements "in one embodiment", "in some embodiments", "in some other embodiments", and the like appearing at different locations in the specification do not mean that these embodiments are all necessarily referred to, but mean "one or more but not all embodiments", unless otherwise specifically emphasized in other ways. The terms "include", "comprise", "have", and their variants all mean "including but not limited to", unless otherwise specifically emphasized in other ways.

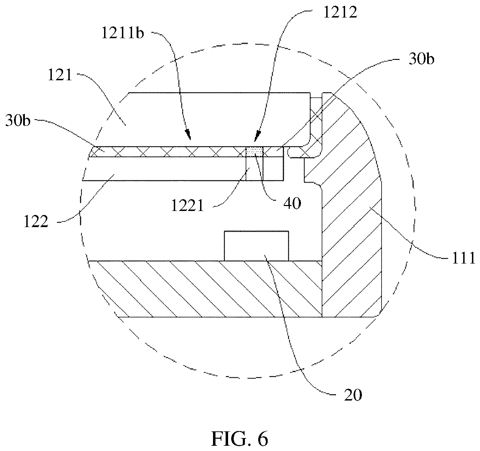

As shown in FIG. 6, in an embodiment provided in this application, the light-transmitting region 1212 may be located right above the display panel 122. A transparent coating 40 is coated between the light-transmitting region 1212 and the second mounting region 1211b. When the display panel 122 is mounted onto the second mounting region 1211b of the cover plate 121, the transparent coating 40 can effectively prevent the adhesive 30b from overflowing to the light-transmitting region 1212, thereby effectively preventing the adhesive 30b from occluding the light-transmitting region 1212.

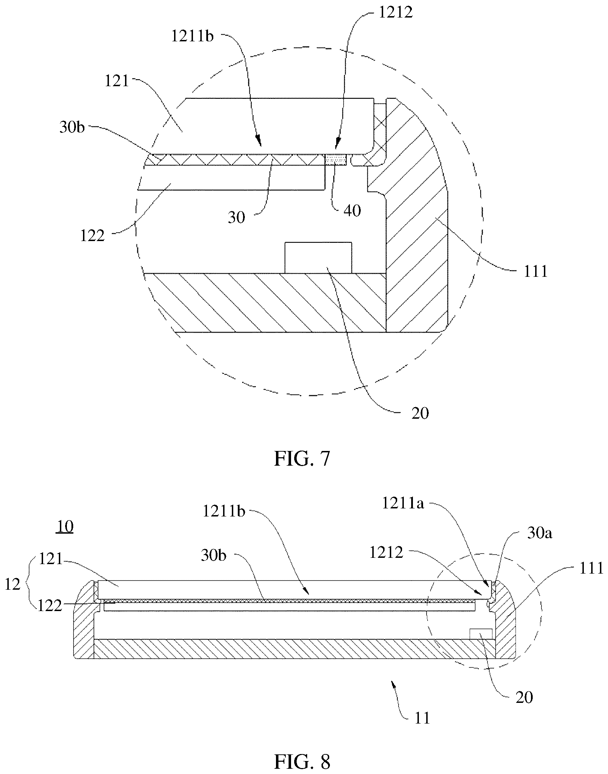

As shown in FIG. 7, in another embodiment provided in this application, the light-transmitting region 1212 may be located at an edge of the display panel 122. A transparent coating 40 is coated between the light-transmitting region 1212 and the second mounting region 1211b. When the display panel 122 is mounted onto the second mounting region 1211b of the cover plate 121, the transparent coating 40 can effectively prevent the adhesive 30b from overflowing to the light-transmitting region 1212, thereby effectively preventing the adhesive 30b from occluding the light-transmitting region 1212.

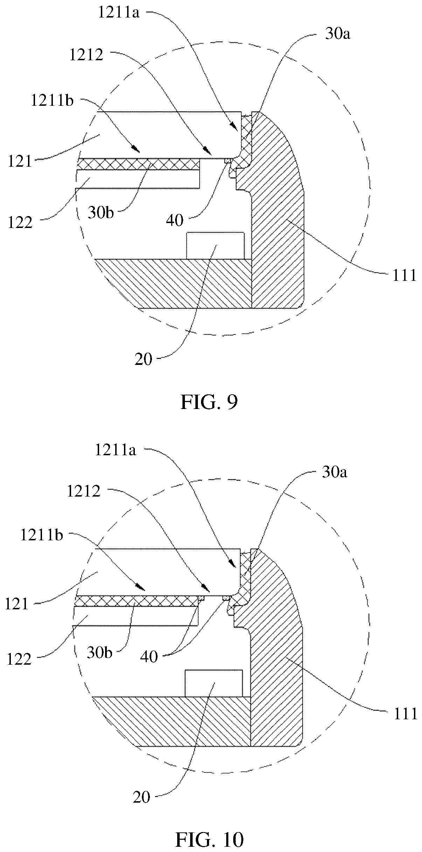

As shown in FIG. 8 and FIG. 9, in an embodiment provided in this application, the light-transmitting region 1212 may be located at an edge of the display panel 122. A transparent coating 40 is coated at the junction between the light-transmitting region 1212 and the first mounting region 1211a. When the display screen 12 is mounted into the frame 111, the transparent coating 40 effectively prevents the adhesive 30a from overflowing to the light-transmitting region 1212, thereby effectively preventing the adhesive 30a from occluding the light-transmitting region 1212.

In addition, as shown in FIG. 10, according to the invention, a transparent coating 40 is coated at the junction between the light-transmitting region 1211 and the first mounting region 1211a and the second mounting region 1211b each. When the display panel 122 is mounted onto the cover plate 121 or the display screen 12 is mounted into the frame 111, the transparent coating 40 effectively prevents the adhesive 30a and the adhesive 30b from overflowing to the light-transmitting region 1212, thereby effectively avoiding the adhesive 30a and the adhesive 30b from occluding the light-transmitting region 1212.

In specific implementations, the transparent coating 40 may include a material with low surface energy, for example, polytetrafluoroethylene, polypropylene and polyethylene.

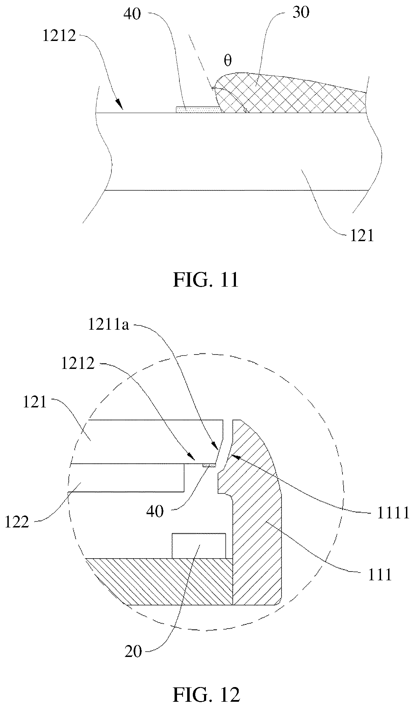

Specifically, as shown in FIG. 11, in a process of mounting the display screen 12 into the frame 111, the contact angle θ between the adhesive 30a and the transparent coating 40 will be increased (for example, greater than 90°) after the adhesive 30a overflowing to the light-transmitting region 1212 is in contact with the material with low surface energy, so that the overflowing adhesive 30a will swell and shrink at the transparent coating 40, thereby effectively preventing the adhesive 30a from overflowing to the light-transmitting region 1212.

In addition, in some specific implementations, the transparent coating 40 may alternatively be a transparent adhesive layer. For example, the transparent adhesive layer may be made from any one or a combination of at least two of acrylate, polyvinyl butyral, polyurethane, styrene resin and unsaturated monomer anaerobic adhesive with good light transmission.

Specifically, in a process of mounting the display screen 12 into the frame 111, the transparent coating 40 has some blocking effect, which will effectively prevent the adhesive 30a from overflowing to the light-transmitting region 1212. In addition, the transparent coating 40 has no adverse effect on the light transmission of the light-transmitting region 1212, which can effectively ensure the operation performance of the optical device 20, such as a proximity sensor and an optical sensor.

In some specific implementations, the thickness of the transparent coating 40 may be not less than that of the adhesive 30a to effectively improve the blocking effect on the adhesive 30a. Alternatively, in some implementations, the fluidity of the transparent coating 40 may be less than that of the adhesive 30a, so that the blocking effect on the adhesive 30a can be effectively improved.

In specific implementations, the transparent coating 40 may be coated at different locations.

According to the invention, as shown in FIG. 12, the transparent coating 40 is coated at the junction between the light-transmitting region 1212 and the first mounting region 1211a.

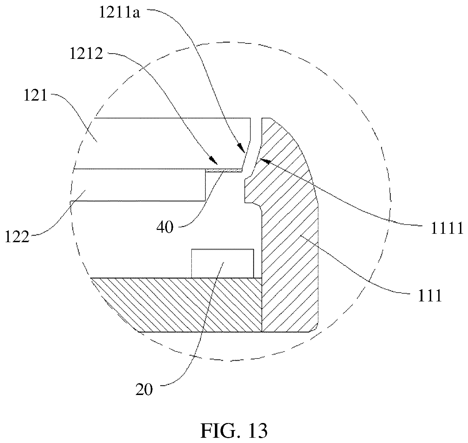

For example, as shown in FIG. 13, the transparent coating 40 may be spread over the light-transmitting region 1212.

It may be understood that in other implementations, the transparent coating 40 may alternatively be coated on a part of the light-transmitting region 1212, and the specific location of the transparent coating may be adjusted correspondingly based on the actual situation, which is not specifically limited in this application.

In addition, in specific implementations, the first mounting region 1211a and the light-transmitting region 1212 may be disposed at different locations in the display screen 12.

According to the invention, the first mounting region 1211a is located at a side of the cover plate 121. Specifically, the entire side of the cover plate 121 may be used as the first mounting region 1211a, or a part of the side (for example, a lower half of the side) may be used as the first mounting region 1211a.

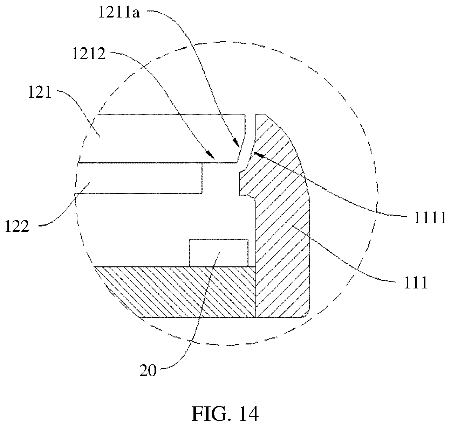

Specifically, as shown in FIG. 14, in another embodiment provided in this application, a side of the cover plate 121 is provided with a downward bevel, where the downward bevel may be used as the first mounting region 1211a. The light-transmitting region 1212 is located on the lower surface of the cover plate 121 and is disposed near an edge of the cover plate 121. Specifically, the light-transmitting region 1212 may be a circular contour, a rectangular contour or a strip contour disposed near a top end, a lower end or left and right ends of the cover plate 121. In specific implementations, the adhesive 30a may be coated around the first mounting region 1211a, the transparent coating 40 is coated on the light-transmitting region 1212, and then the display screen 12 is pressed into the frame 111, so that the adhesive 30a is fully bonded to an abutment surface of the frame 111.

In specific implementations, to ensure the bonding effect between an abutment surface 1111 and the adhesive 30a, the abutment surface 1111 may be a bevel structure opposite to the first mounting region 1211a. When the display screen 12 is pressed into the frame 111, the abutment surface 1111 can provide a good abutment effect to the adhesive 30a and ensure a uniform thickness of the adhesive 30a after pressing, so that the bonding effect between the cover plate and the frame 111 can be effectively ensured.

In addition, in some implementations, the first mounting region 1211a and the abutment surface 1111 may alternatively have a curved surface structure.

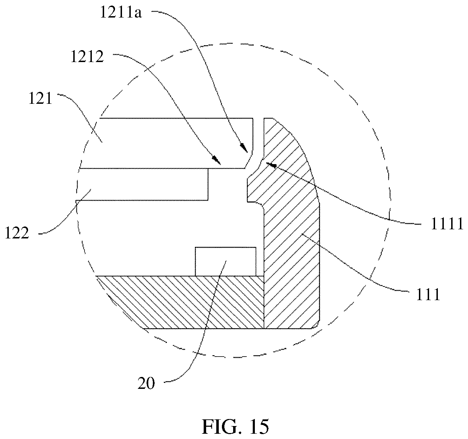

As shown in FIG. 15, in another embodiment provided in this application, a side of the cover plate 121 has a raised cambered surface structure that may be used as the first mounting region 1211a. An inner wall of the frame 111 has a concave cambered surface structure that may be used as the abutment surface 1111. When the display screen 12 is pressed into the frame 111, the abutment surface 1111 can provide a good abutment effect to the adhesive 30a and ensure a uniform thickness of the adhesive 30a after pressing, so that the bonding effect between the cover plate 121 and the frame 111 can be effectively ensured.

It may be understood that in some other implementations, the structural type of the first mounting region 1211a and the abutment surface 1111 is not limited to a bevel or cambered surface structure. For example, the first mounting region 1211a and the abutment surface may be of a structure such as a vertical plane. In addition to the side of the cover plate 121 that may be used as the first mounting area 1211a, the lower surface of the cover plate 121 may also be used as the first mounting region 1211a.

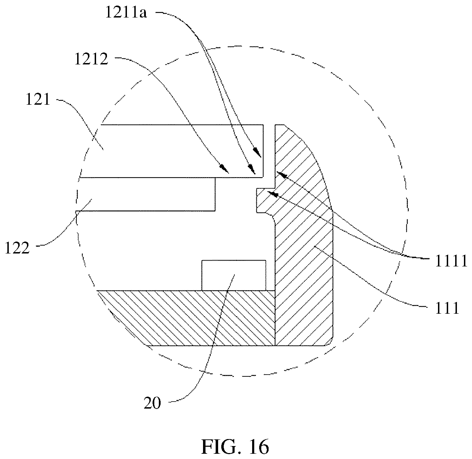

For example, as shown in FIG. 16, in an embodiment provided in this application, an edge part of the lower surface of the cover plate 121 may also be used as the first mounting region 1211a.

In specific implementations, an inner wall of the frame 111 may be provided with a stepped structure to ensure the bonding effect between the frame 111 and the cover plate 121. A horizontal plane of the stepped structure may be used as the abutment surface 1111. It may be understood that in some implementations, the side and the edge part of the lower surface of the cover plate 121 may be used separately as the first mounting region 1211a, or may be used together as the first mounting region 1211a. That is, the adhesive 30a may be coated on the side or the edge part of the lower surface of the cover plate 121, or may be coated on both the side and the edge part of the lower surface of the cover plate 121. Correspondingly, the horizontal plane of the stepped structure in the frame 111 and a vertical plane above the horizontal plane may be used separately as the abutment surface 1111, or may be used together as the abutment surface 1111. That is, the adhesive 30a may be bonded to the horizontal plane of the stepped structure, may be bonded to the vertical plane, or may be bonded to both the horizontal plane and the vertical plane.

In addition, to prevent the adhesive 30a from overflowing to the light-transmitting region 1212, a corresponding structure may be disposed in the frame 111 (or housing 11) to hold the overflowing adhesive 30a or guide an overflow direction.

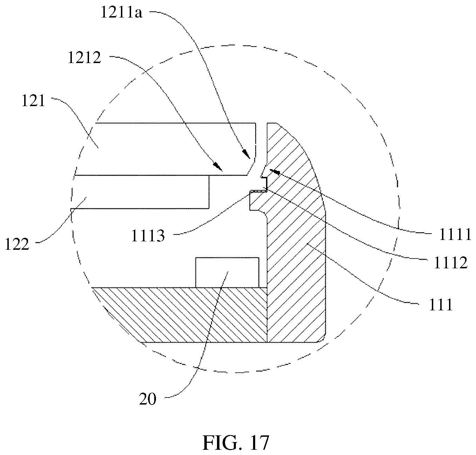

As shown in FIG. 17, in an embodiment provided in this application, an underside of the abutment surface 1111 is provided with an excessive adhesive groove 1112. The excessive adhesive groove 1112 is configured to hold the overflowing adhesive 30a. Specifically, in a process of mounting the display screen 12 into the frame 111, the adhesive 30a that overflows downwards will flow smoothly into the excessive adhesive groove 1112, so that the adhesive 30a can be effectively prevented from overflowing to the light-transmitting region 1212, thereby avoiding adverse effects from the adhesive 30a, such as occlusion of the light-transmitting region 1212.

In specific implementations, the excessive adhesive groove 1112 may be disposed at different locations.

For example, the excessive adhesive groove 1112 may be disposed around the inner wall of the frame 111 to hold the adhesive 30a overflowing from all areas; alternatively, the excessive adhesive groove 1112 may be disposed only in a location corresponding to the light-transmitting region 1212, so that the overflowing adhesive 30a can be effectively prevented from flowing to the light-transmitting region 1212.

In some implementations, the excessive adhesive groove 1112 may have a semi-circular or rectangular cross section, which is not specifically limited in this application.

In addition, to provide a good guiding effect to the overflowing adhesive 30a, and to prevent the overflowing adhesive 30a from flowing to the light-transmitting region 1212, in an embodiment provided in this application, a coating 1113 with high surface energy may be coated on an inner wall of the excessive adhesive groove 1112, and the contact angle between the adhesive 30a and the coating 1113 with high surface energy will be reduced (for example, less than 90°) when the adhesive 30a is in contact with the coating 1113 with high surface energy, so as to guide an overflow direction of the adhesive 30a, so that the overflowing adhesive 30a can flow smoothly into the excessive adhesive groove 1112 and may be prevented from flowing to the light-transmitting region 1212.

In specific implementations, the coating 1113 with high surface energy may be a metal coating such as copper and aluminum, or another coating capable of providing a guiding effect to the adhesive 30a.

In addition, in some implementations, the transparent coating 40 in the display screen 12 and the excessive adhesive groove 1112 in the frame 111 may alternatively be used in combination to effectively prevent the overflowing adhesive 30a from occluding the light-transmitting region 1212. For specific disposing method of the transparent coating 40, refer to the contents in the foregoing embodiments, and details are not described herein again.

In addition, in specific implementations, the location and quantity of the light-transmitting region 1212 may be selected and adjusted correspondingly based on actual needs.

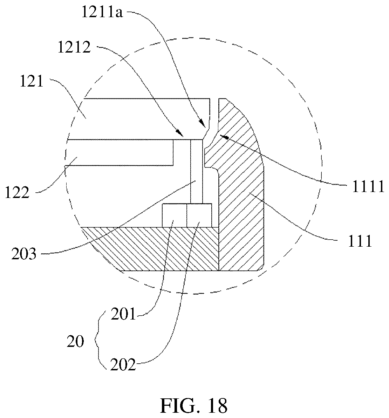

For example, as shown in FIG. 18, in an embodiment provided in this application, a mobile phone 10 is provided with a proximity sensor 20. In specific implementations, the proximity sensor 20 may be an infrared proximity sensor, an ultrasonic proximity sensor, or another type of proximity sensor. For example, an infrared proximity sensor 20 may include a light source 202 for emitting infrared light and a detector 201 for receiving infrared light. The infrared light generated by the light source 202 may be transmitted to the outside through the light-transmitting region 1212. When the infrared light irradiates an object (for example, a human body), the infrared light reflected by the object is transmitted to the detector 201 through the light-transmitting region 1212. The detector 201 can determine whether an external object is approaching or moving away based on an intensity or energy value of the received infrared light compared to a preset threshold. For example, if the energy value received by the detector 201 is greater than a threshold 1, it is considered that an object is approaching, so that a first electrical signal may be generated. If the energy value received by the detector 201 is less than a threshold 2, it is considered that an object is moving away, so that a second electrical signal may be generated. The threshold 1 is greater than or equal to the threshold 2. The mobile phone 10 (for example, the processor in the mobile phone) can trigger a corresponding control function based on the first electrical signal or the second electrical signal generated by the detector 201.

Specifically, when a user is performing an operation such as making or receiving a call or listening to voice, if the infrared proximity sensor 20 senses that an object (for example, a person's ear or face) is approaching the infrared proximity sensor 20 (or display screen 12), a controller can turn off the display screen 12 or disable a touch function of the display screen 12 to prevent an unintended touch operation. When the infrared proximity sensor 20 senses that an object (for example, a person's ear or face) is moving away from the infrared proximity sensor 20 (or display screen 12), the controller can turn on the display screen 12 or enable the touch function of the display screen 12 for use by the user.

In specific implementations, one or two light-transmitting regions 1212 may be provided, and locations of the two light-transmitting regions 1212 may be respectively corresponding to the light source 202 and the detector 201 in the proximity sensor 20.

In addition, in some implementations, to prevent light generated by the light source 202 from being received by the detector 201 inside the mobile phone 10, a lens device 203 or a structure such as a light shielding plate may be disposed at the light source 202 to ensure the normal operation performance of the proximity sensor 20.

In addition, when the optical device 20 is an optical sensor, the optical sensor may be disposed at a location near the top end or the lower end of the mobile phone 10 or at another location. Correspondingly, the light-transmitting region 1212 may be disposed at a location near the top end or the lower end of the display screen 12 or at another location corresponding to the location of the optical sensor. Specifically, the optical sensor can sense the intensity of light in the outside through the light-transmitting region 1212. When the light in the outside is sufficient, a processor can increase the brightness of the display screen 12 based on a signal from the optical sensor. Correspondingly, when the optical sensor senses that the light in the outside is weak, the processor can decrease the brightness of the display screen 12 based on a signal from the optical sensor to allow the brightness of the display screen 12 to match the brightness in the outside, so that the display screen 12 displays a brightness suitable for the user to reduce eye fatigue and improve user experience.

In some implementations, when a plurality of optical devices 20 are provided in the mobile phone 10, the plurality of optical devices 20 can share a light-transmitting region 1212. Alternatively, the display screen 12 may be provided with the same number of light-transmitting regions 1212 as that of the optical devices 20, and each optical device 20 can receive light from the outside or project light to the outside through its corresponding light-transmitting region 1212. For example, when a proximity sensor and an optical sensor are disposed in the mobile phone 10, the proximity sensor and the optical sensor can share a light-transmitting region 1212; alternatively, two light-transmitting regions 1212 are disposed in the display screen 12, one light-transmitting region 1212 corresponds to the proximity sensor, and the other light-transmitting region 1212 corresponds to the optical sensor.

## Claims

1. A mobile terminal, comprising:
a housing (11), comprising a frame (111);
an optical device (20), located in the housing (11); and
a display screen (12), comprising a display panel (122) and a cover plate (121) made of a glass plate or transparent resin plate;
the cover plate (121) is provided with a first mounting region (1211a), a second mounting region (1211b), and a light-transmitting region (1212);
the first mounting region (1211a) is located at an edge of the cover plate (121) and configured to bond to the frame (111) by a first adhesive (30a);
the second mounting region (1211b) is located on a lower surface of the cover plate (121) and configured to bond to the display panel (122) by a second adhesive (30b); and
the light-transmitting region (1212) is located on the lower surface of the cover plate (121); wherein the optical device (20) is configured to receive light from the outside or project light to the outside through the light-transmitting region (1212), and a transparent coating (40) is disposed between the light-transmitting region (1212) and the first mounting region (1211a) or the second mounting region (1211b) to prevent the first adhesive (30a) from overflowing to the light-transmitting region (1212).

2. The mobile terminal according to claim 1, wherein the first mounting region (1211a) is located at a side of the cover plate (121).

3. The mobile terminal according to claim 2, wherein the first mounting region (1211a) is a bevel, a cambered surface, or a stepped surface.

4. The mobile terminal according to any one of claims 1 to 3, wherein the light-transmitting region (1212) is located between the first mounting region (1211a) and the second mounting region (1211b).

5. The mobile terminal according to any one of claims 1 to 3, wherein the second mounting region (1211b) is disposed at a periphery of the light-transmitting region (1212).

6. The mobile terminal according to claim 5, wherein the display panel (122) is provided with a through hole (1221), and a projection of the through hole (1221) on the cover plate (121) is located in the light-transmitting region (1212).

7. The mobile terminal according to any one of claims 1 to 6, wherein the transparent coating (40) comprises a material with low surface energy comprising polytetrafluoroethylene, polypropylene, or polyethylene.

8. The mobile terminal according to any one of claims 1 to 6, wherein the transparent coating (40) comprises a transparent adhesive layer.

9. The mobile terminal according to any one of claims 1 to 8, wherein fluidity of the transparent coating (40) is less than that of the first adhesive.

10. The mobile terminal according to any one of claims 1 to 9, wherein a thickness of the transparent coating (40) is the same as that of the first adhesive.

11. The mobile terminal according to any one of claims 1 to 10, wherein the transparent coating (40) is coated on a part of the light-transmitting region (1212) or the transparent coating (40) is spread over the light-transmitting region (1212).

12. The mobile terminal according to any one of claims 1 to 11, wherein a plurality of light-transmitting regions (1212) are provided.

13. The mobile terminal according to any one of claims 1 to 12, wherein an inner side of the frame (111) is provided with an abutment surface (1111) for bonding with the first adhesive (30a), and an underside of the abutment surface (1111) is provided with an excessive adhesive groove (1112); wherein
the excessive adhesive groove (1112) is configured to hold the first adhesive (30a) that overflows towards the light-transmitting region (1212).

14. The mobile terminal according to claim 13, wherein the excessive adhesive groove (1112) is a groove with a circular, elliptical or polygonal cross section.

15. The mobile terminal according to claim 13 or 14, wherein an inner wall of the excessive adhesive groove (1112) is provided with a coating (1113) with high surface energy causing the contact angle between the first adhesive (30a) and the coating (1113) to be less than 90°.

16. The mobile terminal according to any one of claims 1 to 15, wherein the optical device (20) comprises at least one of a proximity sensor and an optical sensor.

## Patentansprüche

1. Mobiles Endgerät, umfassend:
ein Gehäuse (11), umfassend einen Rahmen (111);
eine optische Vorrichtung (20), die sich in dem Gehäuse (11) befindet; und
einen Anzeigebildschirm (12), umfassend eine Anzeigetafel (122) und eine Abdeckplatte (121), die aus einer Glasplatte oder einer transparenten Harzplatte besteht;
wobei die Abdeckplatte (121) mit einer ersten Montageregion (1211a), einer zweiten Montageregion (1211b) und einer lichtdurchlässigen Region (1212) bereitgestellt wird;
sich die erste Montageregion (1211a) an einer Kante der Abdeckplatte (121) befindet und so konfiguriert ist, dass sie durch einen ersten Klebstoff (30a) mit dem Rahmen (111) verbunden ist;
sich die zweite Montageregion (1211b) auf einer unteren Oberfläche der Abdeckplatte (121) befindet und so konfiguriert ist, dass sie durch einen zweiten Klebstoff (30b) mit der Anzeigetafel (122) verbunden ist; und
sich die lichtdurchlässige Region (1212) auf der unteren Oberfläche der Abdeckplatte (121) befindet; wobei die optische Vorrichtung (20) so konfiguriert ist, dass sie durch die lichtdurchlässige Region (1212) Licht von außen empfängt oder Licht nach außen projiziert, und eine transparente Beschichtung (40) zwischen der lichtdurchlässigen Region (1212) und der ersten Montageregion (1211a) oder der zweiten Montageregion (1211b) angeordnet ist, um zu verhindern, dass der erste Klebstoff (30a) zu der lichtdurchlässigen Region (1212) überläuft.

2. Mobiles Endgerät nach Anspruch 1, wobei sich die erste Montageregion (1211a) an einer Seite der Abdeckplatte (121) befindet.

3. Mobiles Endgerät nach Anspruch 2, wobei die erste Montageregion (1211a) eine Fase, eine gewölbte Oberfläche oder eine gestufte Oberfläche ist.

4. Mobiles Endgerät nach einem der Ansprüche 1 bis 3, wobei sich die lichtdurchlässige Region (1212) zwischen der ersten Montageregion (1211a) und der zweiten Montageregion (1211b) befindet.

5. Mobiles Endgerät nach einem der Ansprüche 1 bis 3, wobei die zweite Montageregion (1211b) an einer Peripherie der lichtdurchlässigen Region (1212) angeordnet ist.

6. Mobiles Endgerät nach Anspruch 5, wobei die Anzeigetafel (122) mit einem Durchgangsloch (1221) bereitgestellt wird und sich ein Vorsprung des Durchgangslochs (1221) auf der Abdeckplatte (121) in der lichtdurchlässigen Region (1212) befindet.

7. Mobiles Endgerät nach einem der Ansprüche 1 bis 6, wobei die transparente Beschichtung (40) ein Material mit niedriger Oberflächenenergie umfasst, umfassend Polytetrafluorethylen, Polypropylen oder Polyethylen.

8. Mobiles Endgerät nach einem der Ansprüche 1 bis 6, wobei die transparente Beschichtung (40) eine transparente Klebeschicht umfasst.

9. Mobiles Endgerät nach einem der Ansprüche 1 bis 8, wobei eine Fluidität der transparenten Beschichtung (40) geringer als die des ersten Klebstoffs ist.

10. Mobiles Endgerät nach einem der Ansprüche 1 bis 9, wobei eine Dicke der transparenten Beschichtung (40) die gleiche wie die des ersten Klebstoffs ist.

11. Mobiles Endgerät nach einem der Ansprüche 1 bis 10, wobei die transparente Beschichtung (40) auf einen Teil der lichtdurchlässigen Region (1212) beschichtet ist oder die transparente Beschichtung (40) über die lichtdurchlässige Region (1212) verteilt ist.

12. Mobiles Endgerät nach einem der Ansprüche 1 bis 11, wobei eine Vielzahl von lichtdurchlässigen Regionen (1212) bereitgestellt wird.

13. Mobiles Endgerät nach einem der Ansprüche 1 bis 12, wobei eine Innenseite des Rahmens (111) mit einer Anschlagoberfläche (1111) zum Verbinden mit dem ersten Klebstoff (30a) bereitgestellt ist und eine Unterseite der Anschlagoberfläche (1111) mit einer Rille (1112) für überschüssigen Klebstoff bereitgestellt ist; wobei
die Rille (1112) für überschüssigen Klebstoff so konfiguriert ist, dass sie den ersten Klebstoff (30a) aufnimmt, der in Richtung der lichtdurchlässigen Region (1212) überläuft.

14. Mobiles Endgerät nach Anspruch 13, wobei die Rille (1112) für überschüssigen Klebstoff eine Rille mit einem kreisförmigen, elliptischen oder polygonalen Querschnitt ist.

15. Mobiles Endgerät nach Anspruch 13 oder 14, wobei eine Innenwand der Rille (1112) für überschüssigen Klebstoff mit einer Beschichtung (1113) mit hoher Oberflächenenergie bereitgestellt wird, die bewirkt, dass der Kontaktwinkel zwischen dem ersten Klebstoff (30a) und der Beschichtung (1113) weniger als 90° beträgt.

16. Mobiles Endgerät nach einem der Ansprüche 1 bis 15, wobei die optische Vorrichtung (20) mindestens eines von einem Näherungssensor und einem optischen Sensor umfasst.

## Revendications

1. Terminal mobile, comprenant :
un boîtier (11), comprenant un cadre (111) ;
un dispositif optique (20), situé dans le boîtier (11) ; et
un écran d'affichage (12), comprenant un panneau d'affichage (122) et une plaque de recouvrement (121) constituée d'une plaque de verre ou d'une plaque de résine transparente ;
la plaque de recouvrement (121) est pourvue d'une première région de montage (1211a), d'une seconde région de montage (1211b), et d'une région de transmission de lumière (1212) ;
la première région de montage (1211a) est située au niveau d'un bord de la plaque de recouvrement (121) et conçue pour se coller au cadre (111) par un premier adhésif (30a) ;
la seconde région de montage (1211b) est située sur une surface inférieure de la plaque de recouvrement (121) et conçue pour se coller au panneau d'affichage (122) par un second adhésif (30b) ; et
la région de transmission de lumière (1212) est située sur la surface inférieure de la plaque de recouvrement (121) ; dans lequel le dispositif optique (20) est conçu pour recevoir de la lumière à partir de l'extérieur ou projeter de la lumière vers l'extérieur à travers la région de transmission de lumière (1212), et un revêtement transparent (40) est disposé entre la région de transmission de lumière (1212) et la première région de montage (1211a) ou la seconde région de montage (1211b) pour empêcher le premier adhésif (30a) de déborder vers la région de transmission de lumière (1212).

2. Terminal mobile selon la revendication 1, dans lequel la première région de montage (1211a) est située au niveau d'un côté de la plaque de recouvrement (121).

3. Terminal mobile selon la revendication 2, dans lequel la première région de montage (1211a) est un biseau, une surface bombée, ou une surface étagée.

4. Terminal mobile selon l'une quelconque des revendications 1 à 3, dans lequel la région de transmission de lumière (1212) est située entre la première région de montage (1211a) et la seconde région de montage (1211b).

5. Terminal mobile selon l'une quelconque des revendications 1 à 3, dans lequel la seconde région de montage (1211b) est disposée au niveau d'une périphérie de la région de transmission de lumière (1212).

6. Terminal mobile selon la revendication 5, dans lequel le panneau d'affichage (122) est pourvu d'un trou traversant (1221), et une projection du trou traversant (1221) sur la plaque de recouvrement (121) est située dans la région de transmission de lumière (1212).

7. Terminal mobile selon l'une quelconque des revendications 1 à 6, dans lequel le revêtement transparent (40) comprend un matériau avec une faible énergie de surface comprenant du polytétrafluoroéthylène, du polypropylène, ou du polyéthylène.

8. Terminal mobile selon l'une quelconque des revendications 1 à 6, dans lequel le revêtement transparent (40) comprend une couche d'adhésif transparent.

9. Terminal mobile selon l'une quelconque des revendications 1 à 8, dans lequel la fluidité du revêtement transparent (40) est inférieure à celle du premier adhésif.

10. Terminal mobile selon l'une quelconque des revendications 1 à 9, dans lequel une épaisseur du revêtement transparent (40) est la même que celle du premier adhésif.

11. Terminal mobile selon l'une quelconque des revendications 1 à 10, dans lequel le revêtement transparent (40) est revêtu sur une partie de la région de transmission de lumière (1212) ou le revêtement transparent (40) est étalé pardessus la région de transmission de lumière (1212).

12. Terminal mobile selon l'une quelconque des revendications 1 à 11, dans lequel une pluralité de régions de transmission de lumière (1212) sont pourvues.

13. Terminal mobile selon l'une quelconque des revendications 1 à 12, dans lequel un côté interne du cadre (111) est pourvu d'une surface de butée (1111) pour le collage avec le premier adhésif (30a), et un côté de dessous de la surface de butée (1111) est pourvu d'une rainure pour de l'adhésif en excès (1112) ; dans lequel
la rainure pour de l'adhésif en excès (1112) est conçue pour contenir le premier adhésif (30a) qui déborde en direction de la région de transmission de lumière (1212).

14. Terminal mobile selon la revendication 13, dans lequel la rainure pour de l'adhésif en excès (1112) est une rainure avec une section transversale circulaire, elliptique ou polygonale.

15. Terminal mobile selon la revendication 13 ou 14, dans lequel une paroi interne de la rainure pour de l'adhésif en excès (1112) est pourvue d'un revêtement (1113) avec une énergie de surface élevée amenant l'angle de contact entre le premier adhésif (30a) et le revêtement (1113) à être inférieur à 90°.

16. Terminal mobile selon l'une quelconque des revendications 1 à 15, dans lequel le dispositif optique (20) comprend au moins l'un d'un capteur de proximité et d'un capteur optique.
